# FASCICULE DE BREVET EUROPEEN

(11) **EP 2 020 555 B1**
(45) Date de publication et mention de la délivrance du brevet: **25.04.2012**
(21) Numéro de dépôt: 08161390.3
(22) Date de dépôt: 29.07.2008
(51) Int. Cl.: F16L 29/04, F16L 37/367, F16L 37/50

(54) **Elément de raccord rapide et raccord rapide comprenant un tel élément**
Schnellkupplungselement und Schnellkupplung, die ein solches Element beinhaltet
Quick connection element and quick connection including such an element

(30) Priorité: 30.07.2007 FR 0705555
(43) Date de publication de la demande: 04.02.2009
(73) Titulaire: STAUBLI FAVERGES, 74210 FAVERGES (FR)
(72) Inventeur: Tiberghien, Alain Christophe, 74320, Sevrier (FR); Durieux, Christophe, 73200, Gilly sur Isère (FR)
(74) Mandataire: Myon, Gérard Jean-Pierre

(56) Documents cités:
- FR-A- 2 864 604
- US-A- 5 191 914
- US-A- 5 398 723
- US-A- 5 762 106

## Description

La présente invention a trait à un élément de raccord rapide pour la jonction amovible de deux canalisations. Un tel élément, mâle ou femelle, est destiné à être accouplé à un élément complémentaire, femelle ou mâle, pour mettre en communication deux canalisations de fluide sous pression. L'invention a également trait à un raccord rapide comprenant, entre autres, un tel élément de raccord.

Généralement, l'emmanchement des éléments mâle et femelle d'un raccord rapide a lieu en alignant un axe longitudinal de l'élément mâle sur un axe longitudinal de l'élément femelle. Dans certaines applications, ces éléments mâle ou femelle sont montés sur des plaques qui sont déplacées par des automates. Tel est en particulier le cas dans des applications de mise en circulation de fluide de refroidissement, par exemple dans le domaine du moulage de pièces en matière plastique. Une telle technique peut également être utilisée pour le raccordement sous-marin de canalisations. Il peut arriver que les axes longitudinaux des deux éléments d'un raccord à emmancher l'un dans l'autre soient décalés latéralement l'un par rapport à l'autre. Pour pallier cette difficulté, il est connu, par exemple de FR-A-2 864 604 d'utiliser un élément de raccordement monté pivotant par rapport à un corps, ce qui permet un raccordement étanche malgré un défaut d'alignement.

Dans certains raccords avec organe de raccordement pivotant, la position axiale de l'organe de raccordement dans le corps correspondant dépend de la pression du fluide présent dans une canalisation amont connectée à l'élément de raccord, alors qu'un joint d'étanchéité permet uniquement de ramener l'organe de raccordement vers une position médiane lors du désaccouplement. Lors de l'emmanchement d'un élément mâle dans un élément femelle, un couple de frottement est généré, ce couple de frottement augmentant avec de la pression du fluide présent dans la conduite reliée à l'élément de raccord comportant l'organe de raccordement, alors qu'il est opposé au pivotement de l'organe de raccordement. Ce couple de frottement est exercé au niveau d'une zone de contact de l'organe de raccordement avec le corps de l'élément de raccord, cette zone de contact étant ménagée sur l'avant de l'organe de raccordement, c'est-à-dire sur une partie de cet organe tournée vers l'autre élément du raccord. L'effort de frottement est donc exercé à une distance axiale du point d'articulation de l'organe de raccordement sur le corps qui est relativement importante, de sorte que cet effort de frottement exerce un couple résistant intense. Ainsi, le couple à exercer en cas de défaut d'alignement à l'extrémité de l'élément mâle d'un raccord, pour permettre le pivotement de l'organe de raccordement et l'accouplement avec l'élément femelle complémentaire, doit être élevé, ce qui engendre une usure prématurée de la surface d'entrée de l'élément femelle et de la surface périphérique de l'élément mâle. La fiabilité et la durée de vie du raccord sont ainsi diminuées. En outre, ceci limite les possibilités de défaut d'alignement que peut accommoder un raccord rapide comprenant un élément de raccord selon l'état de la technique.

C'est à ces inconvénients qu'entend plus particulièrement remédier l'invention en proposant un nouvel élément de raccord dans lequel un effort de frottement exercé lors de l'emmanchement des éléments mâle et femelle ne gêne pas sensiblement le pivotement d'un organe de raccordement par rapport à un corps fixe.

A cet effet, l'invention concerne un élément de raccord rapide pour la jonction amovible de deux canalisations, cet élément comprenant un corps destiné à être fixé sur un support, ainsi qu'un organe de raccordement allongé équipé d'un clapet d'obturation et monté dans ce corps avec possibilité de pivotement, un joint d'étanchéité étant disposé entre le corps et l'organe de raccordement précités. Cet élément de raccord est caractérisé en ce qu'il comprend un ressort exerçant sur une portion de l'organe de raccordement un effort élastique dirigé vers l'arrière de l'élément de raccord et apte à plaquer une première surface de l'organe de raccordement contre une surface du corps et en ce que l'organe de raccordement est pourvu d'une deuxième surface apte à venir en appui contre une butée axiale en cas de déplacement de l'organe de raccordement vers l'avant de l'élément de raccord par rapport au corps précité.

Au sens de la présente invention, l'avant d'un élément de raccord, mâle ou femelle, est tourné vers l'élément complémentaire femelle ou mâle de ce raccord, lors de leur emmanchement, alors que l'arrière d'un élément de raccord est tourné à l'opposé de l'autre élément, du côté de la canalisation raccordée sur cet élément de raccord.

Grâce à l'invention, l'effort de frottement entre l'organe de raccordement pivotant et le corps fixe s'exerce entre une première surface de cet organe de raccordement et une surface correspondante du corps qui peuvent être disposées à une distance axiale relativement faible d'un point de pivotement de l'organe de raccordement sur le corps. Ainsi, le couple résultant de l'effort de frottement, qui est antagoniste au pivotement de l'organe de raccordement, est relativement faible. L'effort à exercer sur l'extrémité de l'organe de raccordement pour permettre l'emmanchement des éléments mâle et femelle en cas de décalage latéral de leurs axes longitudinaux respectifs est donc relativement faible. L'usure de la surface d'entrée de l'élément femelle et de la surface périphérique de l'élément mâle est fortement diminuée et la durée de vie du raccord est augmentée. En outre, la coopération de la deuxième surface et de la butée garantit un fonctionnement sécurisé du raccord, même en cas de défaillance du ressort ou de surpression momentanée dans la canalisation amont. Enfin, l'effort de frottement à vaincre lors de l'emmanchement des éléments mâle et femelle dont les axes sont décalés est inversement proportionnel à la pression dans la conduite reliée à l'élément comportant l'organe de raccordement pivotant.

Selon des aspects avantageux mais non obligatoires de l'invention, un tel élément de raccord peut incorporer une ou plusieurs des caractéristiques suivantes :
- La résultante de l'effort élastique a une intensité supérieure à l'intensité de la résultante de l'effort de pression nominal exercé sur l'organe de raccordement par le fluide présent dans une canalisation reliée au le corps.
- Le joint d'étanchéité est disposé dans une gorge ménagée à la périphérie d'une portion arrière en saillie de l'organe de raccordement, qui est globalement cylindrique à base circulaire et reçue dans un logement creux de forme correspondante du corps. Dans ce cas, le diamètre d'une partie de la surface radiale externe de la portion arrière en saillie située, par rapport à cette gorge, du côté de la première surface est supérieur au diamètre d'une autre partie de la surface radiale externe de la portion arrière en saillie située, par rapport à cette gorge, à l'opposé de cette première surface.
- La distance axiale entre, d'une part, le bord de la gorge situé, par rapport à cette gorge, du côté de la première surface et, d'autre part, l'extrémité avant d'une surface radiale du logement creux de réception de la portion arrière en saillie, a une valeur strictement supérieure à la distance axiale entre la deuxième surface de l'organe de raccordement et la butée.
- La butée axiale est formée par un composant rapporté à l'intérieur du corps.
- Le ressort est disposé autour de l'organe de raccordement, dans un logement formé par le corps. Ce ressort est avantageusement disposé entre la butée axiale et un épaulement externe de l'organe de raccordement, orienté vers l'avant de l'élément.
- L'organe de raccordement est bi-partite et comprend une partie arrière, logée dans le corps et formant les première et deuxième surfaces, et une partie avant, faisant saillie hors du corps. Dans ce cas, on peut prévoir que le diamètre intérieur de la butée axiale est inférieur au diamètre extérieur maximum d'une ou plusieurs zones de l'organe de raccordement disposées entre la butée axiale et l'extrémité avant de l'organe de raccordement.
- L'élément constitue un élément mâle de raccord.
- L'extrémité avant de l'organe de raccordement, qui est destinée à pénétrer dans un élément de raccord femelle correspondant, à un diamètre inférieur à celui d'au moins une portion intermédiaire de l'organe de raccordement qui dépasse du corps.
- Le corps est apte à être fixé sur une plaque de manoeuvre supportant plusieurs éléments de raccord.

L'invention concerne également un raccord rapide pour la jonction amovible de deux canalisations qui comprend, entre autres, un premier élément de raccord tel que ci-dessus.

De façon avantageuse, le deuxième élément du raccord, qui est complémentaire du premier élément, a une surface d'entrée évasée apte à recevoir en appui glissant une extrémité de l'organe de raccordement. On peut, en outre, prévoir que le deuxième élément de raccord est équipé d'un clapet d'obturation. Le deuxième élément du raccord comprend avantageusement un poussoir apte à exercer sur le clapet du premier élément un effort de déplacement axial de ce clapet par rapport à l'organe de raccordement, alors que la face avant de ce poussoir est bombée.

L'invention sera mieux comprise et d'autres avantages de celle-ci apparaîtront plus clairement à la lumière de la description qui va suivre d'un mode de réalisation d'un élément de raccord et d'un raccord conformes à son principe, donnée uniquement à titre d'exemple et faite en référence aux dessins annexés dans lesquels :
- la figure 1 est une coupe longitudinale d'un raccord conforme à l'invention comprenant un élément conforme à l'invention, en configuration désaccouplée ;
- la figure 2 est une vue à plus grande échelle du détail II à la figure 1 ;
- la figure 3 est une coupe analogue à la figure 1 lorsque le raccord est en cours d'emmanchement de ses éléments mâle et femelle, avec décalage latéral de ces éléments ; et
- la figure 4 est une coupe analogue à la figure 1 lorsque le raccord est en configuration accouplée, avec décalage latéral de ses éléments mâle et femelle.

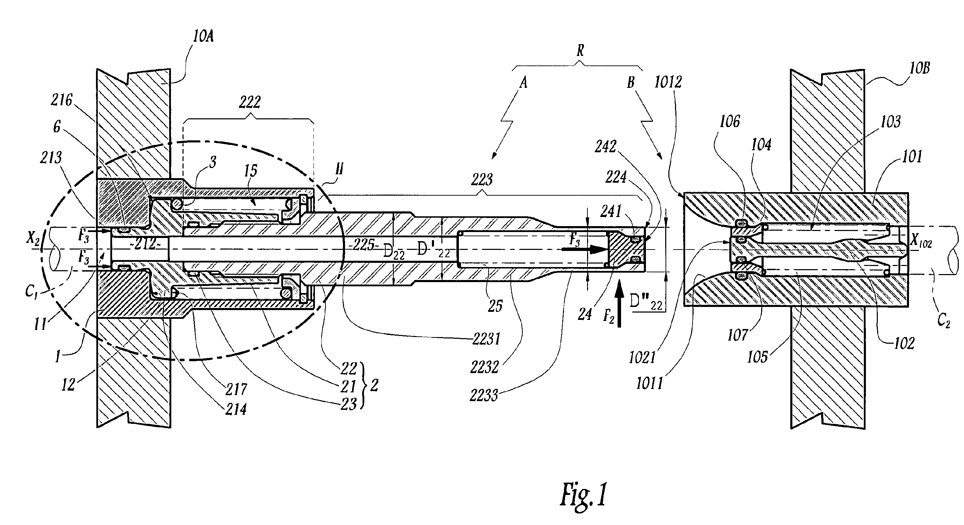

Le raccord R représenté aux figures 1 à 4 comprend un élément ou embout mâle A et un élément femelle B raccordés respectivement à une canalisation amont C₁ et à une canalisation aval C₂. La canalisation amont C₁ est elle-même raccordée à une source de fluide sous pression non représentée, par exemple une pompe délivrant un liquide caloporteur sous une pression de 15 bars.

L'élément mâle A désaccouplé comprend un corps 1 immobilisé, par vissage, dans une plaque 10A destinée à être manoeuvrée par un automate et sur laquelle sont montés d'autres éléments de raccord non représentés. Le corps 1 peut être immobilisé par d'autres moyens sur la plaque 10A, par exemple soudé ou immobilisé par coopération de formes.

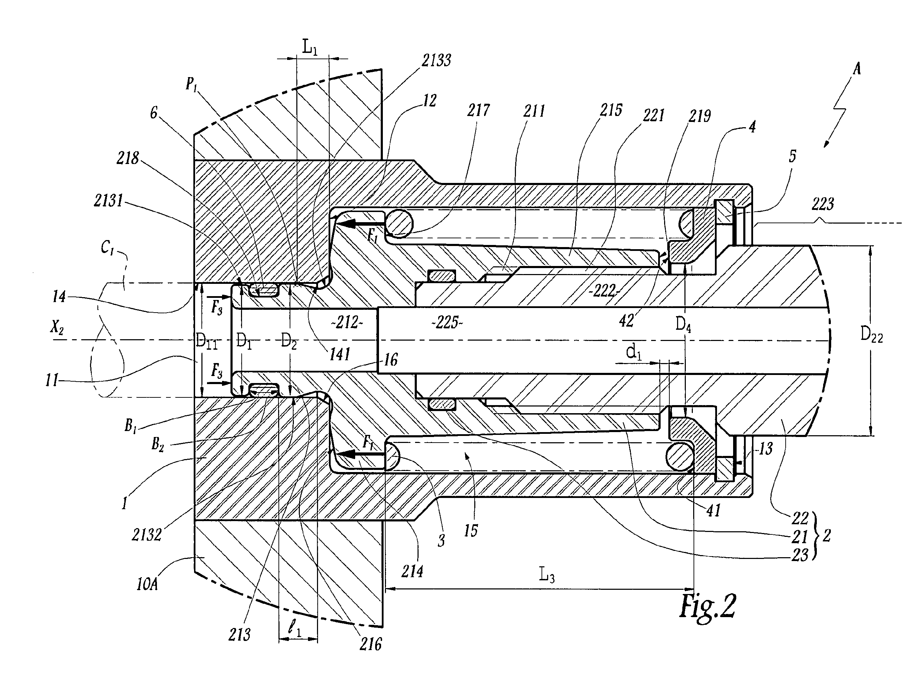

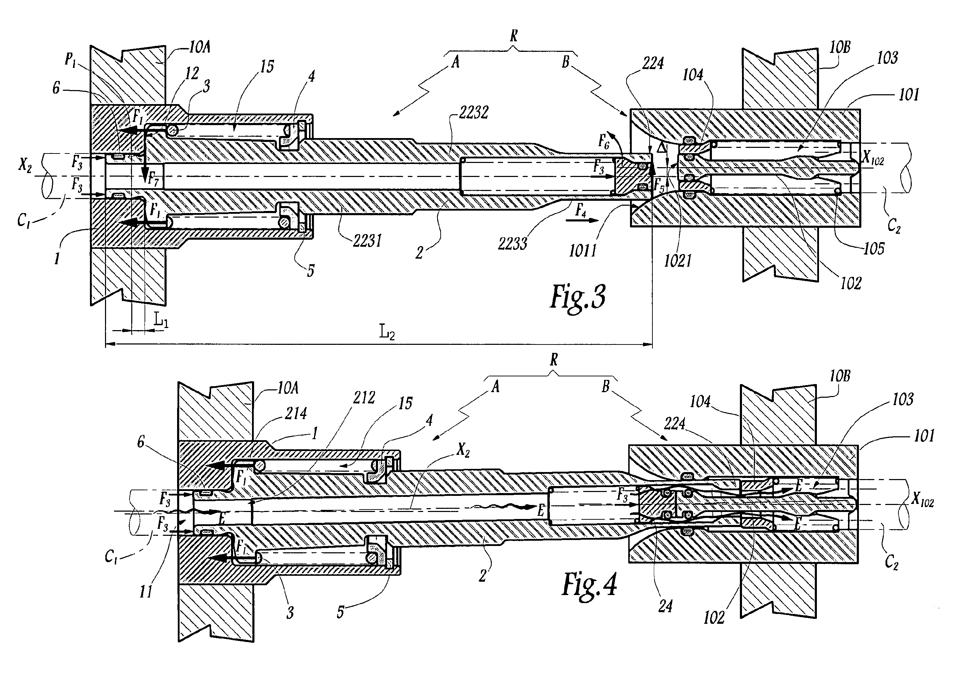

L'élément mâle A comprend également un organe de raccordement 2 qui est de forme allongée et qui est en partie engagé dans un logement intérieur 15 du corps 1. L'organe 2 comprend une partie arrière 21 et une partie avant 22 assemblées l'une à l'autre par vissage, un joint d'étanchéité 23 étant intercalé entre elles. La partie arrière 21 comprend un taraudage 211 qui coopère avec un filetage externe 221 de la partie avant 22 pour l'assemblage des parties 21 et 22. Pour la clarté du dessin, l'organe 2 est représenté monobloc aux figures 3 et 4, mais sa structure ressort clairement des figures 1 et 2.

On note X₂ l'axe longitudinal de l'organe 2. Les parties 21 et 22 sont cylindriques et à base circulaire centrée sur l'axe X₂.

La partie arrière 21 est creuse et définit un conduit 212 de circulation de fluide sous pression, ce conduit étant centré sur l'axe X₂. La partie arrière 21 comprend une portion d'extrémité arrière 213 engagée dans un conduit axial 11 du corps 1 qui prolonge le logement 15 et dont on note D₁₁ le diamètre. La canalisation C₁ est reliée au conduit 11. Le diamètre extérieur de la portion d'extrémité arrière 213 est adapté au diamètre D₁₁ pour permettre l'introduction à jeu réduit de la portion d'extrémité arrière 213 dans le conduit 11.

La partie arrière 21 comprend également une portion 214 formant un double épaulement externe et dont le diamètre est sensiblement supérieur au diamètre D₁₁. On note respectivement 216 et 217 les surfaces de la portion 214 qui sont globalement perpendiculaires à l'axe X₂, orientées vers l'arrière et vers l'avant de l'élément A et qui définissent les épaulements. La première surface 216 est convexe, alors que la surface 217 est sensiblement plane. A partir de la portion 214 et en direction de l'avant de l'élément A, la partie arrière 21 forme une jupe 215, qui porte, sur l'intérieur, le taraudage 211.

On note 12 la surface annulaire entourant le conduit 11 et formant le fond du logement 15. La surface 12 reçoit en appui la surface 216.

La portion d'extrémité arrière 213 fait saillie vers l'arrière par rapport à la première surface 216 pour être engagée dans le conduit 11.

Un ressort hélicoïdal 3 est monté autour de la partie arrière 21 dans le logement 15, entre la surface 217 et une butée axiale formée par une bague 4 reçue dans le logement 15 et maintenue en place dans ce logement au moyen d'un segment d'arrêt 5 formé par un circlips reçu dans une gorge intérieure 13 du corps 1.

Le ressort 3 est comprimé entre la surface 217 et une surface 41 de la bague 4 tournée vers la surface 12, de telle sorte qu'il exerce sur la portion 214 un effort élastique F₁ qui plaque normalement la surface 216 contre la surface 12. On note L₃ la longueur de travail du ressort 3 qui est la distance axiale entre les surfaces 41 et 217.

La partie avant 22 dépasse à l'extérieur du logement 15. On note 222 la portion de la partie avant 22 reçue dans le logement 15 et 223 la portion de cette partie qui fait saillie vers l'avant par rapport au corps 1.

Le diamètre extérieur de la portion 223 décroît lorsqu'on se rapproche de l'extrémité avant 224 de la partie avant 22. Plus précisément, le diamètre extérieur de la partie avant 22 prend trois valeurs décroissantes au fur et à mesure que l'on s'éloigne de la bague 4 et que l'on se rapproche de l'extrémité 224, à savoir D₂₂, D'₂₂, D"₂₂. En effet, trois zones 2231, 2232 et 2233 de la portion 223 sont définies, respectivement avec les diamètres D₂₂, D'₂₂ et D"₂₂. On note que la zone 2231 se prolonge jusqu'à l'intérieur du logement 15, en regard du circlips 5. En variante, seules deux zones de diamètres différents peuvent être prévues sur la portion 223.

L'organe 2 est équipé d'un clapet 24 monté dans le conduit central 225 de la partie avant 22 au voisinage de l'extrémité 224. Ce clapet est équipé d'un joint d'étanchéité 241 et chargé par un ressort 25 pour venir en appui contre un siège formé par la surface intérieure de la partie avant 22, au voisinage de son extrémité avant 224. La face avant 242 du clapet 24 est plane et affleurante avec la surface annulaire d'extrémité de la partie avant 22 qui l'entoure en configuration fermée du clapet 24.

La portion d'extrémité arrière 213 est pourvue d'une gorge 218 dans laquelle est reçu un joint d'étanchéité 6 qui est en appui contre la surface radiale 14 du conduit 11 et assure l'étanchéité entre le conduit 11 et le logement 15. On note B₁ le bord de la gorge 218 du côté de la canalisation C₁. On note, B₂ le bord de cette gorge du côté de la surface 216, c'est-à-dire du côté du ressort 3. On note 2131 la partie de la surface radiale externe de la portion d'extrémité arrière 213 qui est comprise entre l'extrémité libre de cette portion et la gorge 218. La partie 2131 est de diamètre D₁. On note 2132 la partie de la surface radiale externe de la portion d'extrémité arrière 213 qui est comprise entre la gorge 218 et un dégagement 2133 de liaison avec la première surface 216. La partie 2132 est de diamètre D₂. La valeur du diamètre D₁ est inférieure à la valeur du diamètre D₂, de telle sorte que la partie de surface 2132 forme une zone d'appui privilégiée de la portion d'extrémité arrière 213 contre la surface 14, à faible distance axiale de la première surface 216.

Lorsqu'un effort F₂ perpendiculaire à l'axe X₂ est exercé sur la portion 223, notamment au voisinage de l'extrémité 224, l'organe 2 pivote autour d'une zone d'appui entre l'organe 2 et le corps 1.Du fait de la construction de l'élément mâle A, cette zone d'appui est située au niveau de l'arrière de l'organe 2. Dans la suite de la présente description, l'hypothèse est prise que l'appui de l'organe 2 sur le corps 1 a lieu au niveau d'un point de pivotement P₁ créé entre la partie de surface 2132 et la surface 14. L'organe 2 peut ainsi pivoter, au niveau du point P₁, autour d'un axe perpendiculaire à l'axe X₂ et au plan des figures 1 à 4. Dans la configuration des figures 1 et 2, l'obturateur 2 ne pivote pas par rapport au corps 1. La position du point P₁ est toutefois repérée sur la figure 2 pour la clarté du dessin.

L'assemblage de l'élément mâle ou embout A a lieu en insérant le joint 6 dans la gorge 218. Le joint 23 est également mis en place dans la gorge correspondante de la partie arrière 21. Le ressort 3 est alors disposé autour de la jupe 215, en appui contre la surface 217, puis la bague 4 est apposée contre la spire d'extrémité libre du ressort 3. La partie 22 est alors vissée dans la partie 21, ce qui permet de constituer un sous-ensemble de l'élément A formé par l'organe 2, le ressort 3, la bague 4 et les joints 23 et 6. Comme le diamètre intérieur D₄ de la bague 4 est inférieur au diamètre D₂₂, un mouvement axial de la bague 4 vers l'avant de l'organe 2, sous l'action du ressort 3, est bloqué par la zone 2231 de la portion 223, ce qui évite un désassemblage intempestif du sous-ensemble précité et facilite son montage dans le corps 1.

La mise en place du joint 6 dans la gorge 218 peut être postérieure à l'assemblage du sous-ensemble précité.

Le sous-ensemble ainsi formé peut alors être partiellement introduit dans le logement 15, jusqu'à ce que la portion d'extrémité arrière 213 soit insérée dans le conduit 11 et que la surface 216 porte contre la surface 12, suite à quoi le circlips 5 peut être mis en place dans la gorge 13. Dans cette configuration, la bague 4 comprime le ressort 3 qui maintient le contact entre les surfaces 216 et 12 grâce à l'effort F₁.

Dans cette configuration, l'organe 2 obture le corps 1. C'est pourquoi on le qualifie parfois d'« obturateur » ou « obturateur pivotant ».

Le fluide présent dans la conduite C₁ exerce sur l'organe 2 une force de pression F₃ tendant à pousser cet organe vers l'avant. La raideur et la longueur de travail L₃ du ressort 3 sont choisies de telle sorte que la résultante de l'effort F₁ exercé par le ressort 3 sur la surface 217 a une intensité supérieure à l'intensité de la résultante de l'effort F₃ exercé sur l'organe 2 par la pression nominale du fluide présent dans la canalisation C₁. Du fait de la géométrie des pièces ces résultantes sont parallèles à l'axe X₂. Ainsi, si la pression nominale du fluide caloporteur dans la conduite C₁ est égale à 15 bars, le ressort 3 est dimensionné pour plaquer la portion 214 contre le fond 12 du logement 15 tant que la pression du fluide dans la canalisation C₁ reste inférieure ou égale à la valeur de 15 bars.

L'élément femelle B comprend un corps 101 dans lequel est immobilisé un poussoir 102 et qui définit un conduit 103 de circulation de fluide. Un clapet annulaire 104 est disposé autour du poussoir 102 en étant chargé par un ressort 105 vers une configuration d'appui contre un siège correspondant. Des joints d'étanchéité 106 et 107 sont prévus dans des gorges, respectivement sur le corps 101 et sur le poussoir 102. On note X₁₀₂ l'axe longitudinal du poussoir 102 qui est également l'axe central du conduit 103.

Le corps 101 forme une surface évasée 1011 entre la surface avant du clapet 104 en configuration fermée et la face avant 1012 du corps 101. Cette surface d'entrée est convergente en direction du poussoir 102 et peut recevoir en appui glissant l'extrémité avant 224 de l'organe 2 lors de l'accouplement des éléments A et B.

La face avant 1021 du poussoir 102 est bombée. Elle est convexe, en forme de tronçon de sphère.

Le corps 101 est vissé dans une plaque 10B qui peut être plus ou moins rapprochée de la plaque 10A, comme mentionné précédemment. Il est possible de fixer le corps 101 dans la plaque 10B par d'autres techniques.

En pratique, chacune des plaques 10A et 10B porte plusieurs éléments de raccord, mâles ou femelles, qui ne sont pas représentés pour la clarté du dessin.

Lors de l'emmanchement des éléments A et B les axes X₂ et X₁₀₂ sont normalement alignés. Toutefois, comme représenté à la figure 3, les axes X₂ et X₁₀₂ peuvent être sensiblement parallèles mais un décalage latéral Δ peut exister lorsqu'on rapproche les plaques 10A et 10B, selon une direction globalement parallèle à l'axe X₁₀₂., ce dont il convient de pouvoir s'accommoder.

Lorsque l'organe 2 entre en contact avec la surface 1011, compte tenu du mouvement d'avance de l'élément A vers l'élément B qui est représenté par la flèche F₄ à la figure 3, l'extrémité avant 224 de l'organe 2 glisse sur la surface 1011 en subissant un effort de contact dont une composante F₅ est globalement perpendiculaire à l'axe X₂. Cette composante d'effort F₅ tend à faire pivoter l'organe 2 par rapport au corps 1, ce que représente la flèche F₆ à la figure 3.

Du côté opposé à celui par lequel l'extrémité 224 vient en appui contre la surface 1011 par rapport à l'axe X₂, la partie de surface 2132 vient en appui contre la surface 14, ce qui forme le point de pivotement P₁ autour duquel pivote l'organe 2 par rapport au corps 1. Ce point P₁ est alors situé sur un cercle formant l'extrémité avant de la portion de surface 2132. Pendant ce pivotement, le ressort 3 maintient l'organe 2 en appui localement contre la surface 12 dans une zone diamétralement opposée au point d'application de la composante F₅ de l'effort de contact par rapport à l'axe X₂, tandis qu'une partie de la première surface 216 se décolle de la surface 12. Pendant cette phase de pivotement de l'organe 2 par rapport au corps 1, un jeu subsiste entre l'organe 2 et la bague 4, de sorte qu'il n'y a pas de contact entre ces deux pièces. Ainsi, du fait du déplacement relatif, au niveau de leur zone d'appui, des surfaces 216 et 12 résultant du pivotement de l'organe 2, un effort de frottement F₇ est généré à l'interface des surfaces 216 et 12.

On note L₁ la distance axiale, c'est-à-dire la distance prise parallèlement à l'axe X₂, entre le point P₁ et la surface 216. Cette distance correspond à la longueur du bras de levier de l'effort F₇ résistant au pivotement F₆. La longueur L₁ est inférieure ou égale à 20% de la longueur axiale totale L₂ de l'organe 2 qui est du même ordre de grandeur que la longueur du bras de levier de la composante F₅ radiale de l'effort de contact exercée par la surface 1011 sur l'extrémité avant 224 et qui a tendance à faire pivoter l'organe 2 autour du point P₁. Plus généralement, comme la zone d'appui pour pivotement de l'organe 2 sur le corps 1 est située sur l'arrière de l'organe 2, c'est-à-dire à proximité des surfaces de contact entre l'organe 2 et le corps 1 au niveau desquelles peuvent exister des frottements et qui sont également situées sur l'arrière de l'organe 2, le bras de levier, de l'ordre de L₁, de chaque effort de frottement est très inférieur au bras de levier, de l'ordre de L₂, de la composante F₅. L'effort F₅ ne doit donc pas être trop intense pour vaincre les frottements, ce qui limite les risques d'endommagement de la surface 1011 et de l'extrémité 224 lors du glissement relatif de ces parties.

L'extrémité avant 224 de l'organe 2 peut donc glisser sur la surface 1011, ce qui accentue le pivotement F₆ de l'organe 2 dans le corps 1 jusqu'à ce que l'extrémité avant 224 parvienne au niveau du clapet 104 sous l'effet du mouvement d'avance F₄. Du fait de la poursuite de ce mouvement, le poussoir 102 pousse le clapet 24 à l'intérieur du conduit 225, alors que la face annulaire avant de l'extrémité 224 pousse le clapet 104 dans le conduit 103. On parvient alors dans la configuration de la figure 4 où les plaques 10A et 10B sont en butée mécanique l'une contre l'autre, par des moyens non représentés, et où les deux canalisations C₁ et C₂ sont raccordées, la circulation de fluide pouvant avoir lieu comme représenté par les flèches E. Dans cette configuration, le joint 6 assure l'étanchéité entre, d'une part, la zone de circulation du fluide, formée par les canalisations et conduits C₁, 11, 212, 225, 103 et C₂, et, d'autre part, le logement 15, ceci malgré le pivotement de l'organe 2.

Comme le diamètre D"₂₂ est inférieur au diamètre D'₂₂, la forme de l'extrémité avant 224 de l'organe 2 est adaptée à la géométrie de la zone d'entrée de l'élément femelle B, alors que les zones intermédiaires 2231 et 2232 de la portion 223, qui sont hors des corps 1 et 101 en configuration accouplée du raccord, sont robustes, compte tenu de leurs diamètres extérieurs respectifs D₂₂ et D'₂₂, relativement importants, ce qui est avantageux car ces zones intermédiaires ne sont pas protégées des chocs.

La partie arrière 21 est pourvue d'une surface annulaire 219 qui constitue l'extrémité avant de la jupe 215 et qui vient en appui contre la bague 4 en cas de surpression dans la canalisation C₁, c'est-à-dire dans le cas où l'intensité de l'effort F₃ augmente au point de vaincre l'effort F₁, de telle sorte que les surfaces 216 et 12 sont séparées l'une de l'autre et que l'organe 2 se déplace vers l'avant de l'élément A par rapport au corps 1. La bague 4 sert alors de butée axiale à un mouvement qui aurait tendance à séparer axialement l'organe 2 du corps 1. La bague 4 sert également de butée à l'organe 2 en cas de rupture ou d'affaiblissement du ressort 3 par fatigue.

On note d₁ la distance axiale entre la surface 219 et la surface en regard 42 de la bague 4. On note ℓ₁ la distance axiale entre le bord B₂ et l'extrémité avant de la surface 14 qui, dans l'exemple représenté sur les figures, est un cercle 141 de jonction de cette surface 14 avec un chanfrein 16. La distance d₁ est strictement inférieure à la distance ℓ₁, de telle sorte que, même en cas de mouvement axial vers l'avant de l'obturateur 2 par rapport au corps 1, du fait d'une surpression momentanée dans la canalisation C₁ ou d'une rupture ou d'une détérioration du ressort 3, et alors que les distances d₁ et ℓ₁ varient au point que la distance d₁ peut être nulle, le joint 6 reste en appui contre la surface 14. L'étanchéité de l'élément A est ainsi assurée, même en cas de mouvement axial de l'organe 2 par rapport au corps 1.

Les pièces de sécurité de l'élément A, c'est-à-dire le ressort 3, la bague 4 et le segment 5 sont disposées à l'intérieur du corps 1, de telle sorte qu'elles sont protégées au cours des mouvements relatifs des plaques 10A et 10B.

Comme l'effort F₁ est réparti autour de l'axe X₂, le ressort 3 assure un retour rapide de l'organe 2 en configuration médiane, c'est-à-dire dans une configuration où l'axe X₂ est sensiblement aligné sur un axe central du logement 15 lorsque l'élément mâle A est retiré hors de l'élément femelle B, ce qui est avantageux.

Le caractère bombé de la face avant 1021 du poussoir 102 assure un contact efficace avec le clapet 24, en diminuant les risques de coincement lors du déplacement de ce clapet dans le conduit 225.

L'invention a été représentée dans le cas où l'élément équipé d'un corps et d'un organe de raccordement pivotant est l'élément mâle A du raccord R. Elle est toutefois applicable au cas où c'est l'élément femelle qui est équipé d'un organe de raccordement articulé. Dans ce cas, comme dans le mode de réalisation représenté, l'élément femelle présente une surface d'entrée interne évasée permettant de guider le pivotement de l'élément femelle lors de l'accouplement.

Quel que soit le mode de réalisation, l'effort de frottement F₇ résulte de l'effort normal de contact entre les surfaces 216 et 12 et du coefficient de frottement ces surfaces. Cet effort diminue lorsque la pression augmente dans la canalisation C₁, de sorte que l'effort à exercer pour vaincre le couple résistant dû au frottement est soulagé par la pression régnant dans la canalisation C₁. L'effort maximal à exercer en extrémité d'obturateur est atteint lorsqu'il n'y a pas de pression dans la canalisation C₁, ce qui facilite les tests de validation du fonctionnement du raccord.

L'invention a été représentée dans le cas où le fluide s'écoule dans le raccord R de la canalisation C₁ vers la canalisation C₂. Un écoulement en sens inverse est toutefois possible.

## Revendications

1. Elément (A) de raccord rapide (R) pour la jonction amovible de deux canalisations (C₁, C₂), cet élément comprenant un corps (1) destiné à être fixé sur un support (10A), ainsi qu'un organe de raccordement (2) allongé équipé d'un clapet d'obturation (24) et monté dans le corps avec possibilité de pivotement (F₆), un joint d'étanchéité (6) étant disposé entre le corps et l'organe de raccordement, **caractérisé en ce qu'**il comprend un ressort (3) exerçant sur une portion (214) de l'organe de raccordement (2) un effort élastique (F₁) dirigé vers l'arrière (C₁) de l'élément de raccord (A) et apte à plaquer une première surface (216) de l'organe de raccordement contre une surface (12) du corps et **en ce que** l'organe de raccordement (2) est pourvu d'une deuxième surface (219) apte à venir en appui contre une butée axiale (4) en cas de déplacement de l'organe de raccordement vers l'avant de l'élément de raccord par rapport au corps (1).

2. Elément selon la revendication 1, **caractérisé en ce que** la résultante de l'effort élastique (F₁) a une intensité supérieure à l'intensité de la résultante de l'effort de pression (F₃) nominal exercé sur l'organe de raccordement (2) par le fluide présent dans une canalisation (C₁) reliée au corps (1).

3. Elément selon l'une des revendications précédentes, **caractérisé en ce que** le joint d'étanchéité (6) est disposé dans une gorge (218) ménagée à la périphérie d'une portion arrière en saillie (213) de la première surface, cette portion étant globalement cylindrique à base circulaire et reçue dans un logement creux (11) de forme correspondante du corps (1).

4. Elément selon la revendication 3, **caractérisé en ce que** le diamètre (D₂) d'une partie (2132) de la surface radiale externe de la portion arrière en saillie (213) située, par rapport à la gorge (218), du côté de la première surface (216) est supérieur au diamètre (D₁) d'une autre partie (2131) de la surface radiale externe de la portion arrière en saillie située, par rapport à la gorge, à l'opposé de la première surface.

5. Elément selon l'une des revendications 3 ou 4, **caractérisé en ce que** la distance axiale (ℓ₁) entre, d'une part, le bord (B₂) de la gorge (218) situé, par rapport à la gorge, du côté de la première surface (216) et, d'autre part, l'extrémité avant (141) d'une surface radiale (14) du logement creux (11) de réception de la portion arrière en saillie (213), a une valeur strictement supérieure à celle de la distance axiale (d₁) entre la deuxième surface (219) de l'organe de raccordement et la butée (4).

6. Elément selon l'une des revendications précédentes, **caractérisé en ce que** la butée axiale est formée par un composant (4) rapporté à l'intérieur du corps.

7. Elément selon l'une des revendications précédentes, **caractérisé en ce que** le ressort (3) est disposé autour de l'organe de raccordement (2), dans un logement (15) formé par le corps (1).

8. Elément selon la revendication 7, **caractérisé en ce que** le ressort (3) est disposé entre la butée axiale (4) et un épaulement externe (217) de l'organe de raccordement (2), orienté vers l'avant de l'élément (A).

9. Elément selon l'une des revendications précédentes, **caractérisé en ce que** l'organe de raccordement (2) est bi-partite et comprend une partie arrière (21) logée dans le corps (1) et formant les première et deuxième surfaces (216, 217) et une partie avant (22) faisant saillie hors du corps.

10. Elément selon la revendication 9, **caractérisé en ce que** le diamètre intérieur (D₄) de la butée axiale (4) est inférieur au diamètre extérieur maximum (D₂₂) d'une ou plusieurs zones (2231, 2232) de l'organe de raccordement (2) disposées entre la butée axiale et l'extrémité avant (224) de l'organe de raccordement.

11. Elément selon l'une des revendications précédentes, **caractérisé en ce qu'**il constitue un élément mâle (A) de raccord (R) et **en ce que** l'extrémité avant (224) de l'organe de raccordement (2), qui est destinée à pénétrer dans un élément de raccord femelle correspondant (B), a un diamètre (D"₂₂) inférieur à celui (D₂₂, D'₂₂) d'au moins une zone intermédiaire (2231, 2232) de l'organe de raccordement qui dépasse du corps (1).

12. Elément selon l'une des revendications précédentes, **caractérisé en ce que** le corps (1) est apte à être fixé sur une plaque de manoeuvre (10A) supportant plusieurs éléments de raccord.

13. Raccord rapide (R) pour la jonction amovible de deux canalisations, **caractérisé en ce qu'**il comprend un premier élément de raccord (A) selon l'une des revendications précédentes.

14. Raccord selon la revendication 13, **caractérisé en ce que** le deuxième élément du raccord (B) a une surface d'entrée évasée (1011) apte à recevoir en appui glissant (F₄, F₅) une extrémité (224) de l'organe de raccordement (2).

15. Raccord selon l'une des revendications 13 ou 14, **caractérisé en ce que** le deuxième élément de raccord (B) comprend un poussoir (102) apte à exercer sur le clapet (24) du premier élément (A) un effort de déplacement axial de ce clapet par rapport à l'organe de raccordement (2) et **en ce que** la face avant (1021) de ce poussoir est bombée.

## Claims

1. An element (A) of a quick coupling (R) for releasably connecting together two pipes (C₁, C₂), the element comprising a body (1) for fastening on a support (10A), and an elongate coupling member (2) fitted with a closure valve member (24) and mounted in the body with the possibility of pivoting (F₆), a sealing gasket (6) being disposed between the body and the coupling member, the element being **characterized in that** it includes a spring (3) exerting a resilient force (F₁) on a flange portion (214) of the coupling member (2) that faces towards the rear (C₁) of the coupling element (A) and that is suitable for pressing a first surface (216) of the coupling member against a surface (12) of the body, and **in that** the coupling member (2) is provided with a second surface (219) suitable for bearing against an axial abutment (4) in the event of the coupling member being moved towards the front of the coupling element relative to the body (1).

2. An element according to claim 1, **characterized in that** the resultant of the resilient force (F₁) presents a magnitude greater than the magnitude of the resultant of the nominal pressure force (F₃) exerted on the coupling member (2) by the fluid present in a pipe (C₁) connected to the body (1).

3. An element according to any preceding claim, **characterized in that** the sealing gasket (6) is placed in a groove (218) formed at the periphery of a projecting rear end (213) of the first surface, said portion being substantially cylindrical on a circular base and being received, in the body (1),in a hollow housing (11) of corresponding shape.

4. An element according to claim 3, **characterized in that** a portion (2132) of the outer radial surface of the projecting rear end (213) that is situated, relative to the groove (218) beside the first surface (216), is of diameter (D₂) that is greater than the diameter (D₁) of another portion (2131) of the outer radial surface of the projecting rear end that is situated, relative to the groove, opposite from the first surface.

5. An element according to claim 3 or claim 4, **characterized in that** the axial distance (ℓ₁) between firstly the edge (B₂) of the groove (218) situated on the side of the groove that is beside the first surface (216), and secondly the front end (141) of a radial surface (14) of the hollow housing (11) for receiving the projecting rear end (213), presents a value that is strictly greater than the value of the axial distance (d₁) between the second surface (219) of the coupling member and the abutment (4).

6. An element according to any preceding claim, **characterized in that** the axial abutment is formed by a component (4) fitted inside the body.

7. An element according to any preceding claim, **characterized in that** the spring (3) is placed around the coupling member (2) in a housing (15) formed by the body (1).

8. An element according to claim 7, **characterized in that** the spring (3) is disposed between the axial abutment (4) and an outer shoulder (217) of the coupling member (2) that faces towards the front of the element (A).

9. An element according to any preceding claim, **characterized in that** the coupling member (2) comprises two portions, a rear portion (21) received in the body (1) and forming the first and second surfaces (216, 217), and a front portion (22) projecting from the body.

10. An element according to claim 9, **characterized in that** the inside diameter (D₄) of the axial abutment (4) is less than the maximum outside diameter (D₂₂) of one or more zones (2231, 2232) of the coupling member (2) disposed between the axial abutment and the front end (224) of the coupling member.

11. An element according to any preceding claim, **characterized in that** it constitutes a male element (A) of the coupling (R) and **in that** the front end (224) of the coupling member (2) for penetrating into a corresponding female coupling element (B) has a diameter (D"₂₂) less than the diameter (D₂₂, D'₂₂) of at least one intermediate zone (2231, 2232) of the coupling member that projects beyond the body (1).

12. An element according to any preceding claim, **characterized in that** the body (1) is suitable for being fastened on a drive plate (10A) supporting a plurality of coupling members.

13. A quick coupling (R) for releasably connecting together two pipes, the coupling being **characterized in that** it includes a first coupling element (A) according to any preceding claim.

14. A coupling according to claim 13, **characterized in that** the second element (B) of the coupling has a flared entry surface (1011) suitable for receiving one end (224) of the coupling member (2) bearing (F₄, F₅) slidably thereagainst.

15. A coupling according to any one of claims 13 to 14, **characterized in that** the second coupling element (B) includes a pusher (102) suitable for applying an axial force on the valve member (24) of the first element (A) to move said valve member relative to the coupling member (2), and **in that** the front face (1021) of the pusher is domed.

## Patentansprüche

1. Element (A) einer Schnellkupplung (R) für die lösbare Verbindung von zwei Leitungen (C₁, C₂), wobei dieses Element einen Körper (1), der vorgesehen ist, an einem Träger (10A) befestigt zu werden, sowie ein langgestrecktes Anschlussorgan (2) umfasst, das mit einem Verschlussventil (24) ausgerüstet ist und In dem Körper mit der Möglichkeit des Schwenkens (F₆) angeordnet ist, wobei eine Dichtung (6) zwischen dem Körper und dem Anschlussorgan angeordnet ist, **dadurch gekennzeichnet, dass** es eine Feder (3) aufweist, die auf einen Bereich (214) des Anschlussorgans (2) eine in Bezug auf das Kupplungselement (A) nach hinten (C₁) gerichtete elastische Kraft (F₁) ausübt und geeignet ist, eine erste Fläche (216) des Anschlussorgans gegen eine Fläche (12) des Körpers zu drücken, und dass das Anschlussorgan (2) mit einer zweiten Fläche (219) versehen ist, die geeignet ist, sich gegen einen axialen Anschlag (4) im Falle der Bewegung des Anschlussorgans bezüglich des Kupplungselements nach vorn in Bezug auf den Körper (1) in Anlage zu kommen.

2. Element nach Anspruch 1, **dadurch gekennzeichnet, dass** die Resultierende der elastischen Kraft (F₁) eine Stärke größer als die Stärke der Resultierenden der nominalen Druckkraft (F₃) aufweist, die auf das Anschlussorgan (2) durch das in der Leitung (C₁), die mit dem Körper (1) verbunden ist, vorhandene Fluid ausgeübt wird.

3. Element nach einem der vorhergehenden Ansprüche, **dadurch gekennzeichnet, dass** die Dichtung (6) in einer Nut (218) angeordnet ist, die am Umfang eines vorspringenden hinteren Bereichs (213) der ersten Fläche eingearbeitet ist, wobei dieser Bereich im Ganzen gesehen zylindrisch mit kreisförmiger Grundfläche ist und in einem hohlen Aufnahmeraum (11) mit korrespondierender Form des Körpers (1) aufgenommen ist.

4. Element nach Anspruch 3, **dadurch gekennzeichnet, dass** der Durchmesser (D₂) eines Teils (2132) der radialen Außenfläche des hinteren vorspringenden Bereichs (213), der in Bezug auf die Nut (212) an der Seite der ersten Fläche (216) angeordnet ist, größer ist als der Durchmesser (D₁) eines anderen Teils (2131) der radialen Außenfläche des hinteren vorspringenden Bereichs, der in Bezug auf die Nut entgegengesetzt zur ersten Fläche ist.

5. Element nach einem der Ansprüche 3 oder 4, **dadurch gekennzeichnet, dass** der axiale Abstand (ℓ₁) einerseits zwischen dem Rand (B₂) der Nut (218), der in Bezug auf die Nut auf der Seite der ersten Fläche (216) liegt, und andererseits dem vorderen Ende (141) einer radialen Fläche (14) des hohlen Aufnahmeraums (11) zur Aufnahme des hinteren vorspringenden Bereichs (213) einen streng größeren Wert als der des axialen Abstands (d₁) zwischen der zweiten Fläche (219) des Anschlussorgans und dem Anschlag (4) hat.

6. Element nach einem der vorhergehenden Ansprüche, **dadurch gekennzeichnet, dass** der axiale Anschlag von einer Komponente (4) gebildet wird, die im Inneren des Körpers angebracht ist.

7. Element nach einem der vorhergehenden Ansprüche, **dadurch gekennzeichnet, dass** die Feder (3) um das Anschlussorgan (2) herum in einem in dem Körper (1) gebildeten Aufnahmeraum (15) angeordnet ist.

8. Element nach Anspruch 7, **dadurch gekennzeichnet, dass** die Feder (3) zwischen dem axialen Anschlag (4) und einer externen Schulter (217) des Anschlussorgans (2) angeordnet ist, die nach vorn bezüglich des Elements (A) gerichtet ist.

9. Element nach einem der vorhergehenden Ansprüche, **dadurch gekennzeichnet, dass** das Anschlussorgan (2) zweiteilig ist und einen hinteren Teil (21), der in dem Körper (1) aufgenommen ist und die erste und zweite Fläche (216, 217) bildet, und einen vorderen Teil (22), der aus dem Körper heraus ragt, umfasst.

10. Element nach Anspruch 9, **dadurch gekennzeichnet, dass** der Innendurchmesser (D₄) des axialen Anschlags (4) kleiner als der maximale Außendurchmesser (D₂₂) einer oder mehrerer Zonen (2231, 2232) des Anschlussorgans (2) ist, die zwischen dem axialen Anschlag und dem vorderen Ende (224) des Anschlussorgans angeordnet sind.

11. Element nach einem der vorhergehenden Ansprüche, **dadurch gekennzeichnet, dass** es ein Einsteckelement (A) der Kupplung (R) bildet und dass das vordere Ende (224) des Anschlussorgans (2), das vorgesehen ist, in ein korrespondierendes Kupplungsaufnahmeelement (B) einzugreifen, einen Durchmesser (D"₂₂) kleiner ist als der (D₂₂, D'₂₂) mindestens einer Zwischenzone (2231, 2232) des Anschlussorgans, die über den Körper (1) hinausgeht, aufweist.

12. Element nach einem der vorhergehenden Ansprüche, **dadurch gekennzeichnet, dass** der Körper (1) geeignet ist, auf einer Handhabungsplatte (10A) befestigt zu werden, die mehrere Kupplungselemente trägt.

13. Schnellkupplung (R) für die lösbare Verbindung von zwei Leitungen, **dadurch gekennzeichnet, dass** sie ein erstes Kupplungselement (A) nach einem der vorhergehenden Ansprüche umfasst.

14. Kupplung nach Anspruch 13, **dadurch gekennzeichnet, dass** das zweite Kupplungselement (B) eine aufgeweitete Eintrittsfläche (1011) aufweist, die geeignet ist, in einer gleitenden Auflage (F₄, F₅) ein Ende (224) des Anschlussorgans (2) aufzunehmen.

15. Kupplung nach einem der Ansprüche 13 oder 14, **dadurch gekennzeichnet, dass** das zweite Kupplungselement (B) einen Stößel (102) umfasst, der geeignet ist, auf das Ventil (24) des ersten Elements (A) eine axiale Kraft zum Verschieben dieses Ventils in Bezug auf das Anschlussorgan (2) auszuüben, und dass die Vorderfläche (1021) dieses Stößels bombiert ist.
